# FASCICULE DE BREVET EUROPEEN

(11) **EP 0 509 924 B1**
(45) Date de publication et mention de la délivrance du brevet: **31.07.1996**
(21) Numéro de dépôt: 92401068.9
(22) Date de dépôt: 16.04.1992
(51) Int. Cl.: C08L 5/00, C08J 3/03, E21B 43/25

(54) **Procédé d'amélioration de la dispersibilité et de la filtrabilité des poudres de polymères hydrosolubles**
Verfahren zur Verbesserung der Dispergierbarkeit und der Filtrierbarkeit von Pulvern wasserlöslicher Polymere
Method for improving dispersibility and filtrablity of watersoluble polymer powders

(30) Priorité: 19.04.1991 FR 9104841
(43) Date de publication de la demande: 21.10.1992
(73) Titulaire: ELF AQUITAINE, F-92400 Courbevoie (FR)
(72) Inventeur: Pirri, Rosangela, F-64121 Montardon (FR); Huet, Yves, F-50500 Carentan (FR); Donche, Alain, F-64110 Jurancon (FR)
(74) Mandataire: Boillot, Marc

(56) Documents cités:
- EP-A- 0 140 724
- FR-A- 2 577 982
- FR-A- 2 600 336
- FR-A- 2 633 940

## Description

La présente invention concerne un procédé améliorant la dispersibilité et la filtrabilité des polymères hydrosolubles lorsque ces polymères sont conditionnés sous forme de poudre. Ce procédé est applicable aux polymères naturels (d'extraction), aux polymères de fermentation et notamment au scléroglucane, ainsi qu'aux polymères de synthèse, chaque fois que le procédé de fabrication du polymère inclut une étape de séparation par précipitation au moyen d'un non- solvant.

Les polymères hydrosolubles ont trouvé de nombreuses applications industrielles, notamment dans le domaine pétrolier, en particulier pour la récupération améliorée des hydrocarbures, de la prévention des venues d'eau et de la modification du profil d'injection, pour lesquelles le traitement peut consister à injecter des polymères hydrosolubles au niveau des couches dont on cherche à réduire la perméabilité au droit du puits.

Des caractéristiques précises sont demandées aux polymères hydrosolubles utilisées dans ces différentes applications pétrolières dont deux sont particulièrement importantes, à savoir la viscosité et la filtrabilité des solutions préparées à partir de ces polymères. Une viscosité élevée est indispensable à un bon contrôle de mobilité du fluide dans la formation et un fort rendement viscosimétrique assure des coûts opératoires réduits. Une bonne filtrabilité est essentielle pour éviter le colmatage de la formation dans laquelle est injectée la solution. La dispersibilité est également une caractéristique à prendre en compte. Une dispersibilité élevée favorise en effet un développement rapide de la viscosité et limite l'utilisation des disperseurs mécaniques dont le cisaillement réduit le rendement du produit. Cette caractéristique qui est appréciée lorsque le traitement s'effectue à terre devient d'une grande importance pour les traitements off-shore. Dans les conditions off-shore les capacités de stockage sont en effet limitées et une bonne dispersibilité évite une longue maturation des solutions et une immobilisation excessive de ces capacités de stockage.

Les polymères hydrosolubles disponibles, qu'il s'agisse de polymères naturels, de polymères de fermentation ou de polymères de synthèse présentent tous à des degrés divers une filtrabilité et souvent une dispersibilité insuffisantes. Ces mauvaises caractéristiques sont souvent inhérentes au processus de fabrication du polymère. Certaines étapes des procédés se déroulent parfois dans des conditions mécaniques, thermiques ou chimiques sévères qui génèrent des facteurs d'agrégation du polymère, dégradations structurales ou impuretés. Ces facteurs sont à l'origine d'agrégats de molécules de polymères, nommés microgels, qui, même faiblement présents, réduisent considérablement la filtrabilité des solutions à injecter dans le réservoir.

De nombreux procédés ont été proposés dans l'art antérieur pour améliorer la filtrabilité et la dispersibilité des solutions de polymères hydrosolubles et obtenir ainsi une injectabilité satisfaisante de ces solutions dans le réservoir. Dans de très nombreux cas, ces procédés s'appliquent au polymère hydrosoluble une fois seulement effectuée sa mise en solution. Parmi ces procédés, on peut citer l'incorporation de tensioactifs à la solution de polymère. Le brevet français 2.600.336 et les brevets US 3.853.771, 3.801.502 et 4.212.748, par exemple, préconisent l'utilisation de tensioactifs pour améliorer l'injectivité de solutions de polymères hydrosolubles.

Il faut toutefois noter que si des résultats positifs peuvent être obtenus avec ces différents procédés, ils présentent tous un handicap rédhibitoire. S'appliquant au polymère une fois en solution, leur mise en oeuvre est obligatoirement faite sur le chantier de production pétrolière, ce qui implique des investissements supplémentaires et des équipes spécialisées pour effectuer les traitements. De fait, aucun procédé d'amélioration de la filtrabilité de polymères hydrosolubles en solution ne semble fonctionner à l'échelle industrielle à ce jour.

Pour contourner cette difficulté, plusieurs procédés aboutissant à une formulation directement exploitable ont été proposés dont certains aboutissent à une composition fluide du polymère et d'autres directement au polymère en poudre lesquels ont la préférence des pétroliers du fait de leur encombrement limité. Une amélioration de la dispersibilité de la poudre obtenue est par exemple revendiquée dans le brevet US 4.654.086 par mélange d'un tensioactif au xanthane en poudre. Le procédé décrit dans le brevet français 2.577.982 montre que l'addition de lignosulfonate alcalin aux poudres de xanthane, de scléroglucane et de polyacrylamides améliore sensiblement la dispersibilité de ces polymères hydrosolubles et la filtrabilité des solutions qui en découlent. Il faut toutefois noter que les polymères hydrosolubles en poudre sont réputés d'une part posséder une mauvaise dispersibilité qui affecte la viscosité finale des solutions et d'autre part produire des solutions de plus médiocre filtrabilité que celles dont ils proviennent. L'origine de ces mauvaises caractéristiques des polymères hydrosolubles en poudre est à rechercher dans le processus conduisant du moût de fermentation au polymère en poudre. Ce passage d'une forme liquide à une forme solide tend à dégrader. Dans le cas des polymères de fermentation, xanthane comme scléroglucane, la solution contenant le polysaccharide est mélangée avec un volume équivalent ou supérieur d'un non-solvant organique, généralement de l'isopropanol. Cette opération, appelée coagulation, précipite le polysaccharide sous la forme d'une masse fibreuse, encore chargée d'eau et du non-solvant. Ce précipité, appelé coagulum, est alors pressé pour éliminer au maximum la phase liquide qui l'imprègne, puis morcelé, séché et broyé. Un xanthane ou scléroglucane en poudre est recueilli à l'issue de ces opérations. Malgré les grandes précautions prises, on ne peut éviter une certaine détérioration de la qualité du polymère due à une dénaturation partielle de sa structure qui, si elle est trop forte, peut aller jusqu'à rendre le polymère insoluble.

Comme il est démontré dans l'art antérieur et notamment dans le brevet français 2.577.982, l'incorporation de tensioactifs permet de restituer aux poudres dénaturées une dispersibilité et une filtrabilité qui permet d'envisager leur injection dans le réservoir. D'une manière tout à fait inattendue, on a trouvé que l'incorporation de tensioactifs au polymère pouvait être avantageusement réalisée lorsque le polymère était encore sous la forme de coagulum et notamment lorsque ce polymère était un polysaccharide du type scléroglucane.

Le procédé selon l'invention concerne le procédé selon la présente revendication 1, de préférence un procédé de fabrication d'une poudre de polymère hydrosoluble à forte dispersibilité et à forte filtrabilité caractérisé en ce que on mélange la solution contenant le polymère avec un volume d'un non-solvant en quantité suffisante pour précipiter le polymère sous forme de coagulum, on incorpore ensuite au coagulum un agent constitué d'au moins un tensioactif susceptible d'améliorer la dispersibilité et la filtrabilité, on presse ensuite le coagulum ainsi traité pour éliminer au maximum la phase liquide qui l'imprègne, on morcèle, on sèche et on broie enfin le produit résultant des opérations précédentes jusqu'à l'obtention d'une poudre.

Avantageusement le polymère utilisé est un polysaccharide obtenu par fermentation et en particulier du scléroglucane, le non-solvant utilisé alors étant de préférence de l'isopropanol.

Le scléroglucane qui entre dans les compositions de la présente invention sont des homopolysaccharides hydrosolubles non ioniques de poids moléculaire dépassant 500 000 dont les molécules sont constituées d'une channe linéaire principale formée de motifs D- glucose liés par des liaisons β-1,3 et dont un sur trois est lié à un motif D-glucose latéral par une liaison β-1,6. Ce polysaccharide est obtenu par fermentation d'un milieu à base de sucre et de sels minéraux sous l'action de micro-organismes de type sclérotium et notamment de Sclérotium rolfsii (ATCC 15 206) . Une description plus complète du scléroglucane et de sa préparation peut être trouvée dans le brevet US 3.301.848.

Comme source de scléroglucane, il est recommandé d'utiliser le polysaccharide isolé du milieu de fermentation après filtration du mycélium du champignon producteur. Celui-ci procurerait à la solution de scléroglucane un caractère colmatant incompatible avec l'injection dans le réservoir. Avantageusement, on utilisera pour l'incorporation des tensioactifs le coagulum précipité par un non-solvant du milieu de fermentation ne contenant plus de mycélium.

L'agent tensioactif utilisé selon l'invention est composé soit d'au moins un tensioactif anionique soit d'au moins un tensioactif non-ionique soit d'un mélange de ces deux types de tensioactifs. Les tensioactifs choisis devront présenter un certain caractère lipophile (hydrophobe) se caractérisant par une balance hydrophile-lipophile (BHL) inférieure à 18 et de préférence supérieure à 12. Le coefficient BHL répond à la formule BHL = 20(Mo/M) dans laquelle Mo est la masse de la fraction hydrophile de la molécule et M sa masse totale.

Comme agent tensioactif anionique , on peut utiliser par exemple :
. les savons des acides gras tels que les sels de sodium ou de potassium d'acides gras saturés ou insaturés en C6-C24 ou de dérivés d'acides aminocarboxyliques comme le N-lauryl sarconisate de sodium.
. les sulfates et produits sulfatés tels que les alcoylsulfates alcalins du type laurylsulfate de sodium, les sulfates d'alcools gras polyoxyéthylénés, les sulfates d'alcoylphénols polyoxyéthylénés, les sulfates d'arylalkylphénols polyoxyéthylénés.
. les esters phosphoriques de dérivés oxyéthylénés tels que les phosphates d'alcools gras polyoxyéthylénés, les phosphates d'alcoylphénols polyoxyéthylénés, les phosphates d'arylalkylphénols polyoxyéthylénés.
. les sulfonates alcalins tels que les alcoylsulfonates par exemple les alkylsulfoesters des acides en C4--C30 du type dialkylsulfosuccinate de sodium, les alcoylbenzène-sulfonates comme le monylbenzènesulfonate de sodium et le dodécylbenzène-sulfonate de sodium et le dodecylbenzène-sulfonate de sodium, les lignosulfonates.

Comme tensioactifs neutres, non anioniques, classe préférée de l'invention, on peut envisager :
. les alcoylphénols polyoxyéthylénés comme le nonylphénol polyoxyéthyléné, le dinonylphénol polyoxyéthyléné, le tributylphénol polyoxyéthyléné, le dodecylphénol polyoxyéthyléne
. les alcools gras et acides gras polyoxyéthylénés et/ou polyoxypropylénés
. les alkanolamides d'acides gras polyoxyéthylénés et/ou polyoxypropylènes.
. les esters de polyols, comme les esters de glycérol ou de propylène glycol des acides gras, des huiles et graisses alimentaires, des mélanges d'acides gras et d'acide acétique et/ou lactique et/ou critique et/ou tartrique.
. les esters de saccharose tels que les sucro-esters et les sucroglycérides, les esters d'acides gras de sorbitan et leurs dérivés polyoxyéthylénés et polyoxypropylénés comme les esters de polyéthylèneglycol ou de polypropylèneglycol polyoxyéthylénés, les esters de sorbitan polyoxyéthylénés, les glycérides oléiques polyoxyéthylénés.

Les tensioactifs trouvés particulièrement intéressants sont les mono, bi et trialcoylphénols polyoxyéthylénés comprenant entre 8 et 40 motifs polyoxyéthylénés et de préférence entre 16 et 24 motifs.

Dans le procédé selon l'invention, il est particulièrement avantageux de soumettre le coagulum à l'action d'un mélangeur avant ou durant l'incorporation de l'agent tensioactif. Il est également avantageux de dissoudre préalablement l'agent tensioactif dans une quantité minimum du non-solvant complété si nécessaire par un peu d'eau mais le tensioactif peut être introduit aussi en l'état s'il est liquide à la température du coagulum ou fondu s'il est solide à cette température. Le coagulum est ensuite séché, broyé et conditionné en poudre sèche selon les processus opératoires habituels de la profession.

L'incorporation des tensioactifs au coagulum apporte une amélioration remarquable de la filtrabilité et de la dispersibilité par rapport au procédé classique consistant à imprégner la poudre sèche avec ces mêmes tensioactifs. En effet, pour une même quantité de tensioactifs incorporés au scléroglucane, la filtrabilité et la dispersibilité de la poudre de scléroglucane provenant du coagulum traité sont supérieures à celle de la poudre de scléroglucane directement traité. D'autre part, on montre que pour une même filtrabilité , les quantités de tensioactifs incorporées au coagulum sont trois à quatre fois inférieures à celles incorporées à la poudre sèche. Il faut également noter qu'avec les tensioactifs recommandés selon l'invention, il est remarquable que l'incorporation de tensioactifs au coagulum n'altère pas jusqu'à un taux élevé la qualité de la poudre qui en est issue alors que dans les mêmes conditions la poudre directement traitée présente une consistance pâteuse incompatible avec son transport et sa manipulation. De plus, le coagulum imprégné d'eau et de non-solvant permet l'imprégnation facile et homogène du tensioactif sous la forme fondue ou en solution dans une certaine quantité d'eau et de-non-solvant. Cette opération ne nécessite donc pas d'équipements spéciaux alors que l'imprégnation directe de la poudre est une opération délicate qui conduit, même avec un taux peu élevé de tensioactifs à des poudres collantes et de mauvais aspect.

Ces avantages et d'autres apparaîtront plus clairement à la lecture des figures et des exemples suivants qui illustrent l'invention sans toutefois la limiter.

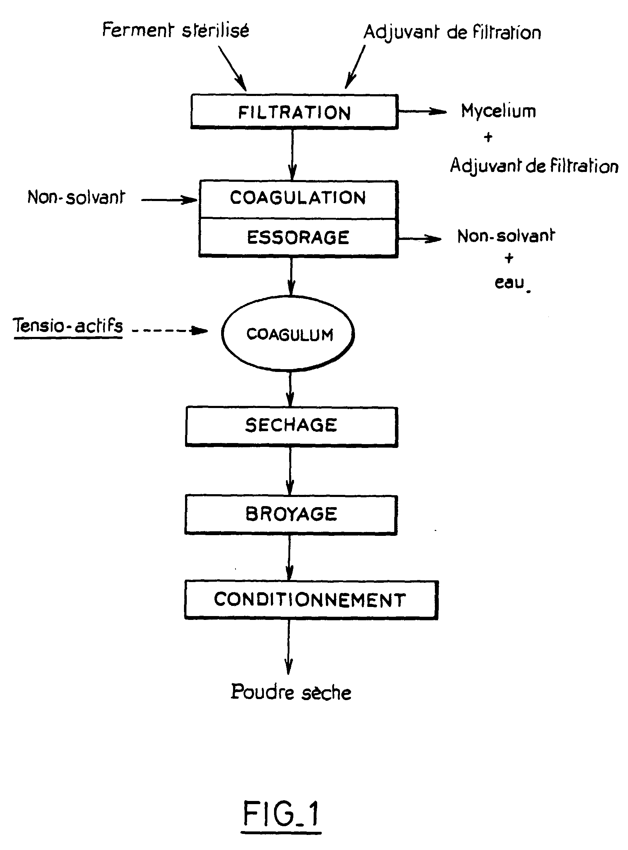

Le schéma présenté sur la figure 1 décrit le procédé classique de préparation des poudres de scléroglucane par coagulation et l'incorporation de tensioactifs proposée selon l'invention.

### EXEMPLE 1 - Incorporation directe de tensioactif à une poudre de scléroglucane.

On a effectué des essais pour déterminer la quantité de tensioactif pouvant être incorporée à la poudre de scléroglucane sans modifier sa consistance.

Dans un mélangeur mécanique fonctionnant à faible vitesse, on introduit la poudre sèche de scléroglucane (Actigum CS11 commercialisé par la Société Sanofi Bio Industries) puis lentement le tensioactif (Nonylphénoloxyéthyléné AP 20 de BASF) dissous dans une faible quantité d'isopropanol contenant 20 % d'eau. Après quelques minutes de mélange, le polymère est extrait du mélangeur et séché dans une étuve sous vide à 60°C pendant 12 heures. L'essai est reproduit pour différents ratios scléroglucane sur tensioactif. Le résultat des essais est présenté ci-dessous :

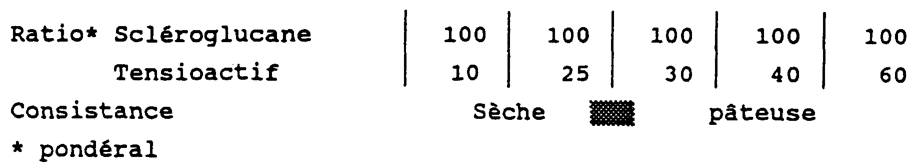

Il apparaît qu'au-delà de 25 % du tensioactif AP 20 par rapport au poids de scléroglucane initial, le produit perd sa consistance sèche pour un aspect pâteux difficilement compatible avec une utilisation commerciale.

### EXEMPLE 2 : Incorporation de tensioactif à un coagulum de scléroglucane et préparation de la poudre de scléroglucane correspondante.

Les essais sont destinés à déterminer la quantité de tensioactif pouvant être incorporée au coagulum sans affecter la consistance de la poudre sèche qui en dérive.

A un ferment contenant 15 g/l de polymère scléroglucane et traité par filtration pour en éliminer le mycélium, on ajoute sous agitation une quantité d'isopropanol contenant 20 % d'eau, égale à 1,5 fois le volume de ferment. Le précipité obtenu ou coagulum est ensuite essoré sur filtre en tissus, lavé deux fois à l'isopropanol à 20 % d'eau puis essoré à nouveau sur filtre en tissus.

Le coagulum de scléroglucane est récupéré et traité par le nonylphénoloxyéthyléné AP 20 de BASF dans les mêmes conditions que celles décrites à l'exemple 1.

On constate qu'au contraire de ce qui est décrit dans l'exemple 1 il est possible d'obtenir par incorporation du tensioactif AP 20 une poudre de scléroglucane de consistance sèche jusqu'à 40 % de tensioactif par rapport au poids de scléroglucane initial. Il est clairement démontré que l'emploi du coagulum permet de renforcer le taux de tensioactif incorporé au scléroglucane sans affecter son aspect.

### EXEMPLE 3 : Filtrabilité des solutions préparées à partir de poudres de scléroglucane additivées de tensioactifs par incorporation directe ou par incorporation au coagulum.

Des tests de filtrabilité ont été effectués avec des solutions de polymères préparés selon les exemples 1 et 2 afin de vérifier l'efficacité de l'incorporation de tensioactifs au coagulum par rapport à l'incorporation directe.

Les solutions de polymères sont préparées comme suit. On ajoute d'abord à de l'eau de mer reconstituée (norme ASTM désignation D 11 41 50 T, modifiée pour avoir un pH de 7,2) une quantité suffisante de poudre pour obtenir une solution dite solution mère, dont la concentration atteint 5 g/l de matière active scléroglucane. Ce mélange s'effectue à 60°C sous agitation (mélangeur à hélice 4700 T/min) durant 30 min. La solution ainsi obtenue est centrifugée pour éliminer l'air dissout puis cisaillée par passage à travers une série de plaques perforées de diamètre 0,7, 0,5 et 0,3 mm sous une pression de 6 bars d'azote.

L'opération est répétée trois fois. La solution mère ainsi préparée est ensuite diluée de manière à obtenir une concentration de 400 ppm (0,4 g/l) de matière active scléroglucane. Cette dilution est obtenue par addition de la solution mère dans une quantité suffisante d'eau de mer reconstituée soumise pendant 3 min à l'agitation d'une turbine Turax fonctionnant à 3000 T/min. La solution ainsi préparée est ensuite soumise, après dégazage par aspiration sous vide, au test de filtrabilité.

Le test de filtrabilité consiste à injecter dans des conditions de faible gradient de cisaillement et à 25°C la solution de polymère à travers une membrane de filtration en acétate de cellulose de diamètre de pore moyen de 5 micromètres et à mesurer la différence de pression autour de la membrane filtrante en fonction du temps.

Pour cet exemple, quatre solutions ont été testées :
- la solution A préparée exclusivement avec du scléroglucane non traité,
- la solution B préparée exclusivement avec du scléroglucane traité par incorporation directe de 10 % de tensioactif/AP 20,
- la solution C préparée exclusivement avec du scléroglucane traité par incorporation directe de 25 % de tensioactif AP20,
- la solution D préparée exclusivement à partir de scléroglucane traité par incorporation de 20 % de tensioactif AP20 au coagulum.

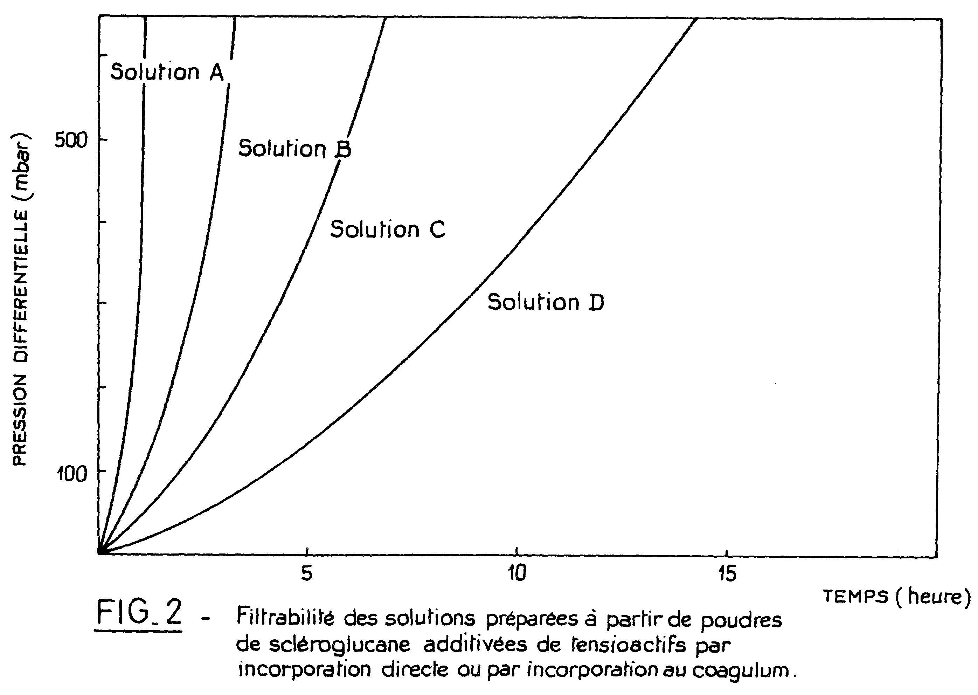

Sur la figure 2 sont représentés les résultats du test de filtrabilité appliqué à ces différentes solutions. On constate que l'incorporation du tensioactif au coagulum améliore plus la filtrabilité des solutions de scléroglucane que l'incorporation directe et que cet effet est obtenu avec une plus faible quantité de tensioactif.

### EXEMPLE 4 : Filtrabilité des solutions préparées à partir de poudres de scléroglucane additivées de tensioactifs par incorporation au coagulum ou par addition à la solution.

On a répété l'exemple 3 avec la solution D et la solution A dans laquelle on a introduit des quantités croissantes du tensioactif AP 20 jusqu'à ce que le résultat du test de filtration soit analogue entre la solution D et la solution A additivée du tensioactif. On constate qu'il est nécessaire d'introduire 80 % de tensioactif AP 20 par rapport à la matière active scléroglucane pour obtenir une filtrabilité analogue à celle de la solution D. Il est ainsi confirmé que l'incorporation de tensioactif à la solution de polymère n'est pas une technique satisfaisante.

### EXEMPLE 5 : Dispersibilité des poudres de scléroglucane additivées de tensioactifs par incorporation au coagulum.

Des essais ont été réalisés pour évaluer l'effet de l'incorporation du tensioactif au coagulum sur la dispersibilité de la poudre de scléroglucane.

Les solutions A et D sont soumises à une filtration à travers une membrane de filtration en polycarbonate de diamètre de pore moyen de 1,2 micromètres sous une pression de quatre bars d'azote. Ce traitement présente l'avantage de retenir sur la membrane les microgels présents dans la solution et de produire une solution représentative de la solution se propageant dans le réservoir.

On mesure ensuite la viscosité des solutions A et D avant et après filtration sur la membrane en polycarbonate. Les mesures de viscosité sont faites au viscosimètre LOW-SHEAR à trois cisaillements différents et à la température de 25°C.

Le tableau ci-dessous rassemble les mesures effectuées sur les solutions A et D avant et après traitement sur membrane de 1,2 microns.

| Cisaillement en s-1 | | 10 | 1 | 0,1 |
|---|---|---|---|---|
| Viscosité en Pa x 10⁻³ | de la solution A avant traitement | 14,5 | 33,4 | 48,2 |
| | de la solution A après traitement | 11,5 | 23,2 | 29 |
| | de la solution D avant traitement | 11,8 | 18,2 | 20,4 |
| | de la solution D après traitement | 11,7 | 17,6 | 18,8 |

On constate que le traitement de la solution A provoque une forte diminution de la viscosité initiale. Cette diminution est caractéristique de l'élimination des microgels qui amplifient considérablement la viscosité des solutions de polymère aux faibles taux de cisaillement. La viscosité de la solution D est au contraire peu modifiée par le traitement ce qui démontre un faible taux de microgels dans la solution. Ce faible taux de microgels montre clairement que l'incorporation de tensioactifs améliore la dispersion de la poudre de scléroglucane dans l'eau.

### EXEMPLE 6 : Injectivité des solutions préparées à partir de poudre de scléroglucane additivées de tensioactifs par incorporation au coagulum.

Des tests d'injectivité ont été réalisés avec des solutions de polymères préparés selon l'exemple 2 afin de vérifier l'injectivité de ces solutions dans un milieu poreux naturel.

Les solutions A et D ainsi que la solution D issue du traitement effectué selon l'exemple 5 (filtration sur membrane de 1,2 micromètres) et nommée ici solution E ont été utilisée pour ces tests d'injectivité.

Le test d'injectivité consiste à injecter dans des conditions de faible gradient de cisaillement et à 25°C la solution de polymère au travers d'un milieu poreux naturel conditionné sous la forme d'un barreau de petites dimensions. Le milieu poreux naturel généralement utilisé pour ce type de test est le grès de Berea. On a retenu pour tester l'injectivité des solutions de polymères préparés selon l'invention un grès de Berea de faible perméabilité (150 mD) représentatif de réservoirs à traiter.

Cette méthode permet de mesurer la réduction de mobilité (rapport de la réduction de la perméabilité à l'eau du milieu après balayage par la solution de polymère sur la réduction de perméabilité à l'eau initiale de l'échantillon) dans le milieu poreux en fonction du volume de solution injecté exprimé en nombre de fois le volume poreux traversé. Une réduction de mobilité constante ou croissant faiblement est le signe d'une bonne injectivité. Une réduction de mobilité croissant fortement avec le volume injecté est le signe d'un caractère colmatant de la solution de polymère.

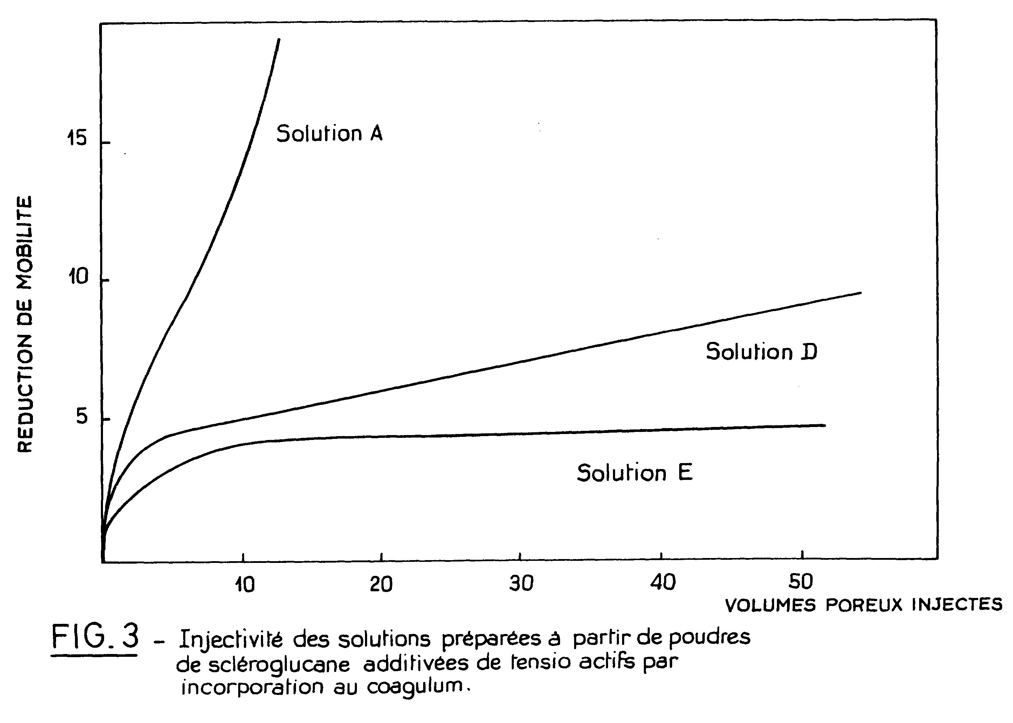

Sur la figure 3 sont représentés les résultats du test d'injectivité appliqué aux solutions A,D et E. On constate que les solutions D et E sont injectables alors que la solution A est colmatante. Il est donc confirmé que l'incorporation de tensioactifs au coagulum permet de produire des poudres de scléroglucane de bonne injectivité, directement utilisable sur chantier.

## Revendications

1. Procédé d'amélioration de la dipersibilité et de la filtrabilité des polymères hydrosolubles conditionnés sous forme de poudre, les polymères étant fabriqués par un procédé incluant une étape de séparation par précipitation au moyen d'un non solvant caractérisé en ce qu'un agent tensioactif capable d'améliorer la dispersibilité et la filtrabilité est incorporé au polymère au cours de cette étape.

2. Procédé de fabrication d'une poudre de polymère hydrosoluble à forte dispersibilité et à forte filtrabilité mettant en oeuvre le procédé selon la revendication 1 caractérisé en ce que
- on mélange la solution contenant le polymère avec un volume d'un non-solvant suffisant pour précipiter le polymère sous forme de coagulum,
- on incorpore au coagulum un agent constitué d'au moins un tensioactif susceptible d'améliorer la dispersibilité et/ou la filtrabilité,
- on presse le coagulum ainsi traité pour éliminer au maximum la phase liquide qui l'imprègne,
- on morcèle, on sèche et on broie le produit résultant jusqu'à obtention d'une poudre.

3. Procédé selon la revendication 2 caractérisé en ce que le polymère est un polymère de fermentation.

4. Procédé selon la revendication 3 caractérisé en ce que le polymère est du xanthane.

5. Procédé selon la revendication 3 caractérisé en ce que le polymère est du scléroglucane.

6. Procédé selon la revendication 5 caractérisé en ce que le scléroglucane utilisé est préalablement isolé du milieu de fermentation après filtration du mycélium du champignon producteur.

7. Procédé selon la revendication 2 ou 3 caractérisé en ce que le non-solvant est organique, par exemple de l'isopropanol.

8. Procédé selon l'une des revendications 1 à 7 caractérisé en ce que l'agent tensioactif utilisé est composé soit d'au moins un tensioactif anionique, soit d'au moins un tensioactif non-anionique, soit d'un mélange des deux types de tensioactifs.

9. Procédé selon la revendication 8 caractérisé en ce que le tensioactif choisi présente un caractère lipophile se caractérisant par une balance hydrophile-lipophile inférieure à 18 et de préférence supérieure à 12.

10. Procédé selon la revendication 9 caractérisé en ce que le ou les tensioactifs utilisés sont soit des savons d'acides gras, soit des sulfates ou produits sulfatés, soit des esters phosphoriques de dérivés oxyéthylénés, soit des sulfonates alcalins.

11. Procédé selon la revendication 9 caractérisé en ce que le ou les tensioactifs non-ioniques utilisés sont soit des alcoylphénols polyoxyéthylénés, soit des alcools gras et acides gras polyoxyéthylénés et/ou polyoxypropylénés, soit des alkanolamides d'acides gras polyoxyéthylénés et/ou polyoxypropylénés, soit des esters de polyols, soit des esters de saccharose.

12. Procédé selon la revendication 11 caractérisé en ce que les tensioactifs sont choisis parmi les mono-, bi- ou trialcoylphénols polyoxyéthylénés comprenant entre 16 et 24 motifs polyoxyéthylénés.

13. Procédé selon la revendication 2 caractérisé en ce que on soumet le coagulum à l'action d'un mélangeur avant l'incorporation de l'agent tensioactif.

14. Procédé selon l'une des revendications 2 à 13 caractérisé en ce que on dissout préalablement l'agent tensioactif dans une quantité minimum du non-solvant complété si nécessaire par un peu d'eau.

15. Application du procédé selon une des revendications 1 à 14 à la prévention des venues d'eau.

16. Application du procédé selon une des revendications 1 à 14 à la modification du profil d'injection d'eau.

17. Application du procédé selon une des revendications 1 à 14 à la récupération améliorée des hydrocarbures.

## Patentansprüche

1. Vefahren zur Verbesserung der Dispergier- und Filtrierbarkeit von in Pulverform aufbereiteten wasserlöslichen Polymeren, die nach einem Verfahren hergestellt werden, das eine Stufe der Abtrennung durch Ausfällung mit Hilfe eines Nichtlösers umfaßt, dadurch **gekennenzeichet,** daß im Verlaufe dieser Stufe in das Polymer ein Tensid eingearbeitet wird, das die Dispergier- und Filtrierbarkeit zu verbessern vermag.

2. Verfahren zur Herstellung eines Pulvers eines wasserlöslichen Polymers mit starker Dispergierbarkeit und starker Filtrierbarkeit unter Durchführung des Verfahrens nach Anspruch 1, dadurch **gekennzeichneit,** daß man die das Polymer enthaltende Lösung mit einem für die Ausfällung des Polymers in Koagulatform ausreichenden Volumen eines Nichtlösers mischt, in das Koagulat ein Mittel einarbeitet, das wenigstens aus einem Tensid besteht, das die Dispergier- und/oder Filtrierbarkeit zu verbessern vermag, das auf diese Weise behandelte Koagulat zur maximalen Entfernung der wäßrigen Phase, mit der es getränkt ist, auspreßt und das erhaltene Produkt zerkleinert, trocknet und bis zur Erzielung eines Pulvers vermalt.

3. Verfahren nach Anspruch 2, dadurch **gekennzeichnet,** daß das Polymer ein Fermentationspolymer ist.

4. Verfahren nach Anspruch 3, dadurch **gekennzeichnet,** daß das Polymer Xanthan ist.

5. Verfahren nach Anspruch 3, dadurch **gekennzeichnet,** daß das Polymer Scleroglucan ist.

6. Verfahren nach Anspruch 5, dadurch **gekennzeichnet,** daß das verwendete Scleroglucan vorgängig aus dem Fermentationsmedium nach Abfiltrieren des Mycels des produzierenden Pilzes isoliert wird.

7. Verfahren nach Anspruch 2 oder 3, dadurch **gekennzeichnet,** daß der Nichtlöser ein organischer Nichtlöser wie z.B. Isopropanol ist.

8. Verfahren nach einem der Ansprüche 1 bis 7, dadurch **gekennzeichnet,** daß das verwendete Tensid aus wenigstens einem anionischen Tensid oder wenigstens einem nichtanionischen Tensid oder einem Gemisch aus beiden Typen von Tensiden zusammengesetzt ist.

9. Verfahren nach Anspruch 8, dadurch **gekennzeichnet,** daß das gewählte Tensid lipophilen Charakter hat, der durch ein hydrophil-lipophiles Gleichgewicht von unter 18 und vorzugsweise von über 12 gekennzeichnet ist.

10. Verfahren nach Anspruch 9, dadurch **gekennzeichnet,** daß das oder die verwendete(n) Tensid(e) Fettsäureseifen, Sulfate oder Sulfatprodukte, Phosphorsäureester von Oxyethylenderivaten oder Alkalisulfonate sind.

11. Verfahren nach Anspruch 9, dadurch **gekennzeichnet,** daß das oder die verwendete(n) nichtionische(n) Tensid(e) Polyoxyethylenalkylphenole, Polyoxyethylen-und/oder Polyoxypropylenfettalkohole und -fettsäuren, Polyoxyethylen- und/oder Polyoxypropylenfettsäurealkanolamide oder Ester von Polyolen oder von Saccharose sind.

12. Verfahren nach Anspruch 11, dadurh **gekennzeichnet,** daß die Tenside unter Polyoxyethylenmono, -bi- oder -trialkylphenolen mit 16 bis 24 Polyoxyethylengruppen ausgewählt werden.

13. Verfahren nach Anspruch 2, dadurch **gekennzeichnet,** daß man das Koagulat vor der Einarbeitung des Tensids in einem Mischer mischt.

14. Verfahren nach einem der Ansprüche 2 bis 13, dadurch **gekennzeichnet,** daß man das Tensid vorgängig in einer minimalen Menge eines gegebenenfalls mit etwas Wasser versetzten Nichtlösers löst.

15. Verwendung des Verfarens nach einem der Ansprüche 1 bis 14 zur Verhinderung von Wassereinbrüchen.

16. Verwendung des Verfahrens nach einem der Ansprüche 1 bis 14 zur Abänderung des Wassereinsprizprofils.

17. Verwendung des Verfahrens nach einem der Ansprüche 1 bis 14 zur verbesserten Gewinnung der Kohlenwasserstoffe.

## Claims

1. Process for improving the dispersibility and the filterability of water-soluble polymers processed to form powders, the polymers being manufactured by a process which includes a stage of separation by precipitation by means of a non-solvent, characterised in that a surface-active agent capable of improving the dispersibility and the filterability is incorporated in the polymer in the course of that stage.

2. Process for manufacturing a water-soluble polymer powder having a high degree of dispersibility and a high degree of filterability, using the process according to Claim 1,
characterised in that
- the solution containing the polymer is mixed with a volume of a non-solvent sufficient to precipitate the polymer in the form of a coagulum;
- an agent formed by at least one surfactant capable of improving dispersibility and/or filterability is incorporated in the coagulum;
- the coagulum thus treated is pressed to eliminate as much as possible of the liquid phase impregnating it;
- the resulting product is broken up, dried and ground until a powder is obtained.

3. Process according to Claim 2, characterised in that the polymer is a fermentation polymer.

4. Process according to Claim 3, characterised in that the polymer is xanthan.

5. Process according to Claim 3, characterised in that the polymer is scleroglucan.

6. Process according to Claim 5, characterised in that the scleroglucan used is previously isolated from the fermentation medium after filtering the mycelium of the producer fungus.

7. Process according to Claim 2 or 3, characterised in that the non-solvent is organic, for example isopropanol.

8. Process according to any one of Claims 1 to 7, characterised in that the surface-active agent used is composed of at least one anionic surfactant or of at least one non-ionic surfactant, or of a mixture of the two types of surfactant.

9. Process according to Claim 8, characterised in that the surfactant chosen has a lipophilic character which is characterised by a hydrophilic-lipophilic balance of less than 18 and preferably greater than 12.

10. Process according to Claim 9, characterised in that the surfactant(s) used are fatty acid soaps, or sulphates or sulphated products, or phosphoric esters of oxyethylene derivatives, or alkaline sulphonates.

11. Process according to Claim 9, characterised in that the non-ionic surfactant(s) used are polyoxyethylene alkyl phenols, or polyoxyethylene and/or polyoxypropylene fatty alcohols and fatty acids, or polyoxyethylene and/or polyoxypropylene fatty acid alkanolamides, or polyol esters, or saccharose esters.

12. Process according to Claim 11, characterised in that the surfactants are selected from the polyoxyethylene mono-, bi- or tri-alkyl phenols containing between 16 and 24 polyoxyethylene units.

13. Process according to Claim 2, characterised in that the coagulum is subjected to the action of a mixer before the incorporation of the surface-active agent.

14. Process according to any one of Claims 2 to 13, characterised in that the surface-active agent is dissolved beforehand in a minimum amount of the non-solvent supplemented, if necessary, by a small amount of water.

15. Application of the process according to any one of Claims 1 to 14 to the prevention of water ingress.

16. Application of the process according to any one of Claims 1 to 14 to the modification of the water injection profile.

17. Application of the process according to any one of Claims 1 to 14 to the improved recovery of hydrocarbons.
